# FASCICULE DE BREVET EUROPEEN

(11) **EP 3 174 349 B1**
(45) Date de publication et mention de la délivrance du brevet: **27.11.2019**
(21) Numéro de dépôt: 17151433.4
(22) Date de dépôt: 29.06.2010
(51) Int. Cl.: H04W 68/04, H04W 60/04, H04W 68/12, H04W 88/06

(54) **PROCÉDÉ D'ACTIVATION D'UN TERMINAL DE COMMUNICATION**
AKTIVIERUNGSVERFAHREN EINES KOMMUNIKATIONSENDGERÄTS
METHOD FOR ACTIVATING A COMMUNICATION TERMINAL

(30) Priorité: 30.06.2009 FR 0954476
(43) Date de publication de la demande: 31.05.2017
(62) Demande divisionnaire de: 10745375.5
(73) Titulaire: Orange, 75015 Paris (FR)
(72) Inventeur: BERTIN, Philippe, 35690 ACIGNE (FR); GUILLOUARD, Karine, 35135 CHANTEPIE (FR)

(56) Documents cités:
- EP-A1- 2 073 563
- US-A1- 2008 014 921
- SARIKAYA XIAOFENG XU VINOD KUMAR CHOYI ANDREW KRYWANIUK ALCATEL CLAUDE CASTELLUCCIA INRIA RHONE-ALPES B: "Mobile IPv6 Hierarchical Paging; draft-sarikaya-seamoby-mipv6hp-00.txt", MOBILE IPV6 HIERARCHICAL PAGING; DRAFT-SARIKAYA-SEAMOBY-MIPV6HP-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 1 septembre 2001 (2001-09-01), XP015034933,

## Description

### 1 DOMAINE DE L'INVENTION

La présente invention se rapporte au domaine des communications dans des réseaux de communication, notamment sans fil.

La présente invention se rapporte plus particulièrement à la mise en œuvre d'une méthode de recherche, de découverte et d'activation de terminaux au sein de tels réseaux de communication sans fil, méthode également appelée « Paging » en langue anglaise.

Dans un réseau de communication sans fil, les terminaux mobiles doivent généralement être situés à proximité d'un nœud d'accès (AN pour "Access Node") pour pouvoir recevoir et émettre des données. Un nœud d'accès est un équipement du réseau qui constitue en quelque sorte une interface entre le terminal et un réseau d'accès, et dont la zone de couverture correspond généralement à une cellule. Le réseau d'accès est découpé en zones de localisation, comprenant un ensemble de cellules. A une zone de localisation est donc associée une liste de nœuds d'accès. Ces nœuds d'accès peuvent implémenter des technologies radio différentes. Les cellules d'une même zone peuvent être adjacentes, se recouvrir partiellement ou totalement, ou encore être disjointes. Un réseau d'accès est ainsi constitué d'une pluralité de nœuds d'accès, eux-mêmes regroupés dans des zones de localisation.

De plus en plus communément, le réseau de communication sans fil est également appelé réseau d'accès. Le réseau d'accès permet d'accéder à d'autres réseaux, et notamment à au moins un réseau dit réseau cœur. La technologie de communication sans fil implémentée dans le réseau d'accès peut être par exemple la technologie GSM (pour "Groupe Spécial Mobile"), ou encore la technologie WiFi. Il existe cependant des réseaux dits « multi-accès ». Ces réseaux multi-accès comprennent une pluralité de nœuds d'accès qui implémentent des technologies de communication différentes. Par exemple au sein du même réseau multi-accès, des nœuds d'accès WLAN (pour "Wireless Local Area Network") et UMTS (pour "Universal Mobile Telecommunication System) peuvent être déployés suivant une architecture unique. Chaque nœud d'accès implémente des fonctions de nœud d'accès de niveau 2 en référence aux couches du modèle OSI (pour "Open Systems Interconnection") permettant l'interconnexion de systèmes. Il s'agit de l'établissement d'une liaison physique (comme ce qui est réalisé par un point d'accès ou une station de base radio par exemple). Chaque nœud d'accès implémente également des fonctions d'adressage et de routage de paquets de données (tels que des paquets IP) qui sont des fonctions d'accès de niveau 3, en référence au modèle OSI. Les nœuds d'accès implémentent également des fonctions liées à la gestion de la mobilité. Ainsi, un réseau multi-accès est composé de nœuds d'accès aptes à fonctionner simultanément ou non selon différentes technologies.

Au sein d'un tel réseau multi-accès, un terminal multi-accès présente lui aussi plusieurs interfaces, qui correspondent chacune à une technologie différente. Un terminal peut avoir une interface GSM, une interface UMTS, une interface WiFi, etc. Un terminal multi-accès peut mettre en œuvre plusieurs flux de communication qui sont basés sur une ou plusieurs adresses IP qui sont allouées au terminal. Chaque flux utilise l'une des adresses IP du terminal et est implicitement ancré sur le routeur auprès duquel l'adresse IP utilisée par le flux a été allouée.

L'invention se rapporte notamment à la recherche et à l'activation de terminaux multi-accès dans un réseau de communication multi-accès, c'est-à-dire à un paging sur un réseau de communication multi-accès. Elle peut également être mise en œuvre dans un réseau d'accès mono-technologie qui ne serait a priori, i.e. sans l'invention, pas apte à mettre en œuvre le mécanisme de paging.

### 2 ART ANTERIEUR

Au sein de ces réseaux multi-accès, certaines technologies d'interfaces sont aptes à mettre en œuvre le mécanisme de paging, c'est-à-dire la diffusion de requêtes de recherche de nœuds mobiles dans un ensemble de cellules dans lequel un terminal peut se déplacer sans le signaler explicitement au réseau, c'est-à-dire dans une zone de localisation. Un terminal n'ayant pas de communications en cours peut passer dans un état de veille et se déplacer dans sa zone de localisation sans que le réseau ne sache précisément dans quelle cellule il se trouve. L'objectif du paging est d'économiser les ressources du terminal et du réseau (telles que par exemple des ressources radio, la signalisation réseau...).

Le terminal en état de veille se contente d'écouter et d'interpréter certaines annonces du réseau telles que les requêtes de paging et la diffusion d'identifiants de zones de localisation. Ces informations sont diffusées de manière propre à chaque technologie considérée, par exemple en utilisant des canaux logiques dédiés. Le terminal est amené à mettre à jour sa localisation à chaque changement de zone de localisation, ainsi que de manière périodique. Chaque mise à jour de localisation implique la sortie de l'état de veille, dans lequel le terminal peut néanmoins revenir immédiatement après. Lorsque le terminal reçoit une requête de paging qui lui est destinée, il met en œuvre une procédure de mise à jour de localisation permettant de le localiser dans sa cellule courante. Il devient donc localisé assez précisément pour que le réseau puisse router le trafic qui lui est destiné.

Cependant, toutes les technologies ne permettent pas la mise en œuvre du mécanisme de paging. Notamment, les technologies sans fil «WiFi» (802.11) ne permettent pas d'implémenter pas cette méthode. Lorsque le terminal se déplace entre deux cellules 802.11, il doit donc systématiquement s'associer au point d'accès de la nouvelle cellule dans laquelle il entre pour rester joignable, même s'il n'a pas de session de trafic en cours.

Dans le cadre des réseaux multi-accès, le problème de l'économie des ressources du terminal et du réseau reste donc entier, puisque toutes les technologies ne sont pas aptes à la mise en œuvre du mécanisme de paging et qu'il est par conséquent difficile par exemple d'économiser les ressources d'un terminal multi-accès dans un réseau multi-accès. Il en est de même dans les réseaux qui n'implémentent qu'une technologie (on parle alors de réseaux mono-technologie), lorsque cette technologie ne permet pas la mise en œuvre du mécanisme de paging.

De plus, dans un réseau multi-accès, il est compliqué de gérer des requêtes de paging pour chaque interface possible du terminal multi-accès de sorte que la mise en état de veille de ce dernier est quasiment impossible.

Afin d'élargir les mécanismes de paging aux réseaux et terminaux multi-accès, différents travaux ont été publiés, tels que par exemple les demandes de brevet EP 2 073 563 A1 et US 2008/014921 A1. Une nouvelle approche de paging pour environnements multi-accès a notamment été proposée. Une telle approche repose sur la coopération entre les réseaux d'accès multi-accès et un élément réseau centralisé, appelé « *Paging Center ».* Deux méthodes sont prévues dans cette approche :
- une méthode basée sur l'enregistrement « Registration based approach » dans laquelle le « Paging Center » maintient l'état des interfaces des terminaux mobiles. Pour joindre un terminal (NM), le réseau contacte le « Paging Center » qui sélectionne le réseau d'accès à utiliser et peut déclencher le paging;
- une méthode qui n'est pas basée sur l'enregistrement « Non registration based approach » dans laquelle le "paging center" déclenche "à l'aveugle" des pagings sur un ou plusieurs réseaux d'accès afin d'essayer de joindre le terminal. Lorsque le terminal reçoit le paging, il sélectionne l'un des réseaux d'accès pour envoyer sa réponse au "paging center".

Le maintien des états du mobile par interface tel qu'envisagé dans ce document pose au moins deux types de problèmes : il génère l'utilisation de contextes de localisation complexes (au minimum, maintien d'un contexte par interface utilisée sur le terminal) ainsi que l'utilisation de signalisations dédiées à chaque technologie. De plus, le "paging center" pose également des problèmes de passage à l'échelle : le "paging center" centralisant les flux de données à destination des terminaux en veille devient potentiellement un point de congestion dans le réseau, particulièrement lorsqu'il s'agit de gérer plusieurs centaines de milliers de terminaux.

En cas de mise en œuvre de l'approche qui n'est pas basée sur l'enregistrement « Non registration based approach », la solution prévue par l'approche précitée consomme énormément de ressources au niveau du réseau, ce qui n'est pas acceptable.

De plus, l'approche proposée n'apporte pas de réponse au problème posé par les technologies qui ne sont pas aptes à mettre en œuvre le mécanisme de paging, telles que les technologies WiFi.

Il existe donc un besoin d'une technique permettant la mise en œuvre d'un mécanisme de paging, tant dans un réseau mono-technologie lorsque la technologie mise en œuvre dans ce réseau ne permet a priori pas l'implémentation d'un tel mécanisme, que dans un réseau multi-accès dans lequel l'une au moins des technologies déployées n'est pas apte à mettre en œuvre un tel mécanisme de paging.

### 3 RESUME DE L'INVENTION

L'invention concerne un procédé d'activation d'un terminal de communication situé dans un réseau de communication sans fil comprenant une pluralité de nœuds d'accès, un terminal correspondant et un programme d'ordinateur, comme défini dans les revendications indépendantes ci-jointes. Mode particuliers de réalisation de l'invention sont définis dans les revendications dépendantes.

Dans la suite, l'expression "mode de réalisation" est entendue comme indiquant des exemples.

Un exemple comprend :
- une étape de réception, par un nœud d'accès dudit réseau de communication, dit nœud d'accès ancre, d'au moins une donnée à transmettre audit terminal de communication ;
- une étape d'identification, par ledit nœud d'accès ancre, d'au moins un nœud d'accès auquel ledit terminal de communication s'est précédemment attaché, dit dernier nœud d'accès connu, à partir de ladite donnée à transmettre ;
- une étape de transmission, audit au moins un dernier nœud d'accès connu, d'au moins une donnée d'activation à destination d'au moins une interface de communication dudit terminal, permettant d'activer ledit terminal.

Ça permet d'activer le terminal de communication de manière ciblée en ne mobilisant, pour la recherche de ce dernier, que les nœuds d'accès auquel le terminal s'est précédemment attaché, et ce, sans distinction de l'interface de communication précédemment utilisée par le terminal de communication pour s'attacher au dernier nœud d'accès connu.

L'attachement d'un terminal comprend d'une part l'établissement d'une liaison physique entre le terminal et le nœud d'accès. Cet établissement d'une liaison est appelé attachement de niveau 2 (liaison), en référence aux couches du modèle OSI, modèle permettant l'interconnexion de systèmes. L'attachement du terminal comprend d'autre part l'obtention d'une ou plusieurs données permettant l'adressage et le routage de paquets de données entre le terminal et le nœud d'accès. Cette obtention est appelée attachement de niveau 3 (réseau) en référence aux couches du modèle OSI. Le dernier nœud d'accès connu auquel le terminal s'est attaché est un nœud d'accès auprès duquel le terminal a effectué un attachement de niveau 2 et un attachement de niveau 3.

L'invention permet de ne pas avoir à se soucier, d'une part de l'état actuel de chaque interface du terminal de communication, et d'autre part de la manière dont le terminal de communication sera activé. En effet, cette activation est prise en charge par les derniers nœuds d'accès connus du terminal. Le nœud d'accès ancre, qui est également appelé ancre de paging, est chargé d'initier et de distribuer, entre les derniers nœuds d'accès connus, la procédure de paging, c'est-à-dire la recherche, la découverte et l'activation du terminal de communication. Dans le cas d'un réseau de communication sans fil mono-technologie qui n'est a priori pas apte à mettre en œuvre un mécanisme de paging, comme par exemple dans le cas d'un réseau WiFi, l'invention permet tout de même de réaliser une activation du terminal à l'aide du dernier nœud d'accès auquel le terminal s'est attaché.

Selon un exemple, ladite étape d'identification dudit au moins un dernier nœud d'accès connu comprend :
- une étape d'obtention d'un contexte d'activation dudit terminal de communication ; et lorsque ledit contexte indique que ledit terminal est inactif :
- une étape d'enregistrement dans ledit nœud d'accès ancre de ladite au moins une donnée à transmettre audit terminal ;
- une étape de recherche, au sein d'une base de données d'attachement, dudit au moins un dernier nœud d'accès connu.

Ainsi, le nœud d'accès ancre est à même de déterminer l'état du terminal et de décider de l'initiation de l'activation de celui-ci lorsqu'il est inactif. En d'autres termes, à la différence de la technique de gestion centralisée du paging, l'invention permet de déléguer la tâche d'initialisation à des nœuds d'accès du réseau de communication. Le nœud d'accès ancre sait qu'il doit réaliser l'initialisation du paging lorsqu'il constate que le terminal est inactif. Le fait que le nœud d'accès ancre puisse rechercher le dernier nœud d'accès connu au sein d'une base de données le rend autonome et participe à l'indépendance du nœud d'accès ancre vis-à-vis d'une entité centralisée.

Un exemple concerne également un nœud d'accès d'un réseau de communication sans fil. Un tel nœud d'accès comprend :
- des moyens de réception d'au moins une donnée à transmettre audit terminal de communication ;
- des moyens d'identification d'au moins un nœud d'accès auquel ledit terminal de communication s'est précédemment attaché, dit dernier nœud d'accès connu, à partir de ladite donnée à transmettre ;
- des moyens de transmission, audit au moins un dernier nœud d'accès connu, d'au moins une donnée d'activation à destination d'au moins une interface de communication dudit terminal, permettant d'activer ledit terminal.

Selon un autre aspect, l'invention concerne également un programme d'ordinateur comprenant des instructions de code de programme pour l'exécution du procédé d'activation tel que décrit précédemment.

Un exemple concerne également un procédé de diffusion d'une donnée d'activation d'un terminal de communication situé dans un réseau de communication sans fil. Selon l'invention, un tel procédé comprend :
- une étape de réception, au sein d'un nœud d'accès, dit dernier nœud d'accès connu, de ladite donnée d'activation en provenance d'un nœud d'accès dudit réseau de communication, dit nœud d'accès ancre, ayant préalablement réceptionné au moins une donnée à transmettre audit terminal de communication ;
- une étape de recherche, au sein d'une base de données d'attachements, d'une information représentative d'un attachement courant dudit terminal de communication ;
- une étape de diffusion d'au moins une requête d'activation comprenant ladite donnée d'activation, dans une zone de localisation dans laquelle se situe ledit terminal, lorsque ladite étape de recherche indique que ledit terminal n'est pas attaché audit dernier nœud d'accès connu.

Ainsi, l'invention permet de pallier la complexité de la gestion des contextes de chaque interface du terminal de communication en laissant au nœud d'accès le soin de vérifier que le terminal de communication n'est pas attaché. On évite donc de lancer une procédure de découverte du terminal (paging) lorsque les informations en possession de l'ancre de paging ne sont pas en concordance avec les informations en possession du dernier nœud d'accès connu, par exemple parce que le terminal de communication vient juste de se rattacher au dernier nœud connu. La procédure de paging est donc distribuée entre le nœud d'accès ancre et le ou les derniers nœuds d'accès connus par ce nœud d'accès ancre. Pour les technologies qui ne supportent pas nativement le paging, l'invention permet de maximiser les chances d'activer le terminal en utilisant le ou les derniers nœuds d'accès connus pour activer le terminal.

Selon un exemple, ladite étape de diffusion comprend une étape de transmission d'une requête d'activation dudit terminal à destination d'au moins un nœud d'accès de ladite zone de localisation avec lequel ledit dernier nœud d'accès connu est connecté.

Ainsi, le nœud d'accès qui reçoit la donnée d'activation, qui est le dernier nœud d'accès connu auquel le terminal a été attaché, n'est pas le seul à participer à la recherche et à l'activation du terminal de communication. Le nœud d'accès sollicite le concours d'autres nœuds d'accès. Dans au moins un mode de réalisation de l'invention, l'étape de transmission est réalisée quel que soit le type de technologie de communication dudit au moins un nœud d'accès de ladite zone de localisation avec lequel ledit dernier nœud d'accès connu est connecté. Ainsi les nœuds d'accès peuvent, dans le cas d'un réseau multi-accès, mettre en œuvre des technologies de communication différentes. Dans ce cas, la diffusion des requêtes d'activation sera réalisée à l'aide de plusieurs technologies différentes et multipliera les chances d'activer le terminal de communication. Lorsque le réseau de communication est basé sur une seule technologie qui ne supporte pas le paging, la transmission à d'autres nœuds d'accès du réseau de communication permet d'élargir la zone de recherche du terminal de communication.

Un exemple concerne également un nœud d'accès d'un réseau de communication sans fil. Un nœud d'accès comprend :
- des moyens de réception d'au moins une donnée d'activation en provenance d'un nœud d'accès dudit réseau de communication, dit nœud d'accès ancre, ayant préalablement réceptionné au moins une donnée à transmettre à un terminal de communication ;
- des moyens de recherche, au sein d'une base de données d'attachements, d'une information représentative d'un attachement courant dudit terminal de communication ;
- des moyens de diffusion d'au moins une requête d'activation comprenant ladite donnée d'activation, dans une zone de localisation dans laquelle se situe ledit terminal, lorsque ladite étape de recherche indique que ledit terminal n'est pas attaché audit nœud d'accès.

Selon un autre aspect, l'invention concerne également un programme d'ordinateur comprenant des instructions de code de programme pour l'exécution du procédé de diffusion tel que décrit précédemment.

Un exemple concerne également un procédé de transmission d'une notification de désactivation d'un terminal de communication situé dans un réseau de communication sans fil comprenant une pluralité de nœuds d'accès.

Un exemple de procédé comprend :
- une étape de réception, par un nœud d'accès courant auquel ledit terminal est attaché, d'une notification de désactivation ;
- une étape de transmission, par ledit au moins un nœud d'accès courant, à un nœud d'accès susceptible de transmettre au moins une donnée audit terminal de communication, dit nœud d'accès ancre, d'au moins une donnée représentative du changement d'état dudit terminal ;
- une étape de suppression de l'attachement dudit terminal au sein dudit au moins un nœud d'accès courant.

Ce permet de notifier non seulement le nœud d'accès auquel le terminal de communication est attaché, mais également le ou les nœuds d'accès qui pourraient souhaiter transmettre des données au terminal de communication. Ces nœuds d'accès peuvent par exemple être des nœuds d'accès qui ont précédemment transmis des données au terminal. Il peut également s'agir de nœuds d'accès qui prévoient de transmettre des données au terminal. Ainsi, même en étant désactivé, le terminal de communication reste joignable dans le réseau multi-accès.

Un exemple concerne également un nœud d'accès d'un réseau de communication sans fil. Selon l'invention un tel nœud d'accès comprend :
- des moyens de réception d'une notification de désactivation en provenance d'un terminal de communication attaché audit nœud d'accès ;
- des moyens de transmission, à un nœud d'accès susceptible de transmettre au moins une donnée audit terminal de communication, dit nœud d'accès ancre, d'au moins une donnée représentative du changement d'état dudit terminal ;
- des moyens de suppression de l'attachement dudit terminal.

Selon un autre aspect, l'invention concerne également un programme d'ordinateur comprenant des instructions de code de programme pour l'exécution du procédé de transmission tel que décrit précédemment.

Un exemple concerne également un procédé de traitement d'une notification de désactivation d'un terminal de communication.

Selon l'invention un tel procédé comprend :
- une étape de réception de ladite notification de désactivation dudit terminal en provenance d'au moins un nœud d'accès courant auquel ledit terminal est attaché ;
- une étape de mémorisation d'au moins une donnée d'identification dudit au moins un nœud d'accès courant ;
- une étape d'association d'au moins un identifiant dudit terminal à ladite donnée d'identification dudit au moins un nœud d'accès courant, délivrant une donnée représentative d'un dernier nœud d'accès connu pour ledit terminal de communication.

Ainsi, l'invention permet de ne pas perdre d'information quant à la localisation du terminal de communication. En effet, comme le terminal de communication est désactivé, il n'est pas possible de déterminer sa localisation précise. L'invention permet de ne pas totalement perdre la trace du terminal en associant à celui-ci le nœud d'accès en provenance duquel la notification de désactivation est reçue. Ainsi, il sera possible, par la suite, d'initialiser une procédure de paging à destination de ce terminal.

Un exemple concerne également un nœud d'accès d'un réseau de communication sans fil. Un tel nœud d'accès comprend :
- des moyens de réception d'au moins une notification de désactivation d'un terminal de communication, en provenance d'au moins un nœud d'accès courant auquel ledit terminal est attaché ;
- des moyens de mémorisation d'au moins une donnée d'identification dudit au moins un nœud d'accès courant ;
- des moyens d'association d'au moins un identifiant dudit terminal à ladite donnée d'identification dudit au moins un nœud d'accès courant, délivrant une donnée représentative d'un dernier nœud d'accès connu pour ledit terminal de communication.

Un exemple concerne également un programme d'ordinateur comprenant des instructions de code de programme pour l'exécution du procédé de traitement tel que décrit précédemment.

Un exemple concerne également un procédé de traitement d'une donnée d'activation d'un terminal de communication multi-accès supportant au moins deux types de technologies de communication différentes, caractérisé en ce qu'il comprend :
- une étape de réception de ladite donnée d'activation par l'intermédiaire d'au moins une première interface de communication ;
- une étape de vérification que ladite donnée d'activation reçue est destinée audit terminal ; et
- une étape d'activation dudit terminal, par l'intermédiaire d'au moins une deuxième interface de communication, différente de ladite première interface, lorsque ladite donnée d'activation reçue est destinée audit terminal.

Ainsi, l'invention permet de ne pas se soucier de l'état de chaque interface de communication du terminal. En effet, le terminal se contente de recevoir une donnée d'activation, et il lui appartient de décider de l'interface de communication qu'il souhaite activer pour basculer dans un état actif.

Selon un exemple ladite étape d'activation dudit terminal comprend :
- une étape d'attachement dudit terminal à au moins un nœud d'accès par le biais de ladite au moins une deuxième interface de communication dudit terminal ;
- une étape de transmission d'au moins une donnée de mise à jour d'une localisation dudit terminal de communication à destination d'un nœud d'accès identifié à l'aide de ladite donnée d'activation.

Ainsi, le terminal passe à l'état actif en utilisant l'interface de communication de son choix, qui peut être différente de l'interface qui lui a permis de recevoir la donnée d'activation. L'interface activée peut correspondre à la meilleure interface disponible au sein du terminal et n'est pas nécessairement, comme c'est le cas dans l'art antérieur, l'interface qui a précédemment été utilisée pour s'associer au dernier nœud d'accès connu.

Selon un exemple un terminal comprend :
- des moyens de réception d'une donnée d'activation par l'intermédiaire d'au moins une première interface de communication ;
- des moyens de vérification que ladite donnée d'activation reçue lui est destinée ; et
- des moyens d'activation dudit terminal, par l'intermédiaire d'au moins une deuxième interface de communication, différente de ladite première interface, lorsque ladite donnée d'activation reçue est destinée audit terminal.

Selon une caractéristique particulière de l'invention, ledit terminal comprend en outre :
- des moyens d'attachement dudit terminal à au moins un nœud d'accès par le biais de ladite au moins une deuxième interface de communication dudit terminal ;
- des moyens de transmission d'au moins une donnée de mise à jour d'une localisation dudit terminal de communication à destination d'un nœud d'accès identifié à l'aide de ladite données d'activation.

Un exemple concerne également un programme d'ordinateur comprenant des instructions de code de programme pour l'exécution du procédé de traitement tel que décrit précédemment.

Dans l'invention, la donnée d'activation qui est transmise au terminal par l'intermédiaire du nœud d'accès ancre et du ou des derniers nœuds d'accès connus est une adresse IP. Cette adresse IP est encapsulée dans un paquet de données transmis sur le réseau de communication. Cette adresse IP est une adresse qui a été attribuée au terminal lors d'une précédente session de communication et est connue de celui-ci. Ainsi, pour activer le terminal de communication, l'invention offre une solution qui permet au terminal de déterminer le nœud d'accès qui sollicite la transmission de données.

Dans le cas d'un réseau multi-accès et d'un terminal multi-accès, l'utilisation d'une adresse IP du terminal permet également à celui-ci de déterminer l'interface de communication qui a été utilisée pour obtenir cette adresse IP. Ainsi, le terminal est à même de choisir l'interface de communication à utiliser pour se réactiver, interface qui présente le plus de caractéristiques en commun (en terme de débit par exemple) avec le nœud d'accès auprès duquel l'adresse IP a été obtenue.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1A présente un synoptique d'un mode de réalisation du procédé d'activation et de désactivation de l'invention dans le cas d'un réseau et d'un terminal multi-accès ;
- la figure 1B présente un synoptique d'un mode de réalisation du procédé d'activation et de désactivation de l'invention dans le cas d'un réseau d'accès mono-technologie qui ne prévoit pas de mécanisme de recherche, de découverte et d'activation de terminal ;
- la figure 2 illustre une architecture d'un réseau dans un mode de réalisation particulier de l'invention ;
- la figure 3 décrit l'enchaînement des étapes d'un mode de réalisation particulier de l'invention ;
- les figures 4, 5 et 6 décrivent un nœud d'accès ancre, un nœud d'accès connu et un terminal selon l'invention.

### 5 DESCRIPTION DETAILLEE DE L'INVENTION

### 5.1 Rappel du principe de l'invention

L'invention propose une gestion astucieuse et optimale du paging dans les réseaux multi-accès ainsi que dans les réseaux mono-technologiques qui ne comprennent pas un tel mécanisme de paging, en permettant une distribution du paging à certains nœuds d'accès du réseau. Pour ce faire, l'invention repose notamment sur deux caractéristiques qui sont, d'une part, l'attribution d'un seul et unique état au terminal, quel que soit le nombre d'interfaces qu'il compte, et d'autre part, la délégation de la fonction de paging à certaines entités du réseau d'accès.

L'invention repose sur la gestion de deux états pour le terminal : actif et passif, quel que soit le nombre de technologies utilisées par le terminal. Soit le terminal est associé au réseau sur une cellule donnée et il est considéré comme actif, soit il se déplace dans une zone de localisation sans que sa localisation ne soit précisément connue et il est à l'état passif. Selon l'invention, un terminal dont certaines de ses interfaces sont en veille au niveau radio alors qu'au moins une interface est active est dans l'état actif pour le réseau.

Selon un mode de réalisation particulier de l'invention, l'état courant de chaque terminal est enregistré dans un nœud d'accès spécifique, dit nœud d'accès ancre, auprès duquel le terminal a précédemment obtenu une adresse, par exemple une adresse IP. Selon l'invention, au moins certains de ces nœuds d'accès ancre sont en mesure de déclencher le paging, c'est-à-dire le mécanisme de recherche du terminal qui permettra de le localiser et donc de le faire basculer dans l'état actif afin qu'il puisse recevoir et transmettre des données. Selon l'invention, ce paging est distribué aux nœuds d'accès ancres qui peuvent le mettre en œuvre. Ce mécanisme de paging par le nœud d'accès ancre est spécifique à l'invention et est décrit en détail par la suite.

D'une manière générale, l'invention comprend deux phases : une phase d'activation du terminal lorsque celui-ci est inactif (ou passif, ce terme étant synonyme d'inactivité pour l'invention) et une phase de désactivation dans laquelle le terminal passe d'un état actif à un état inactif. Ces deux phases sont disjointes et peuvent être mises en œuvre indépendamment. Durant ces deux phases, l'invention utilise les services de plusieurs nœuds d'accès, selon un procédé détaillé ci-après, pour, d'une part, construire et transmettre une requête d'activation du terminal et, d'autre part, relayer et prendre en compte une notification de désactivation d'un terminal au niveau des nœuds d'accès idoine. La gestion de l'état d'activité du terminal (actif/inactif) est donc, selon l'invention, assurée de manière distribuée en utilisant les nœuds d'accès du réseau de communication, que celui-ci soit multi-accès ou mono-technologie.

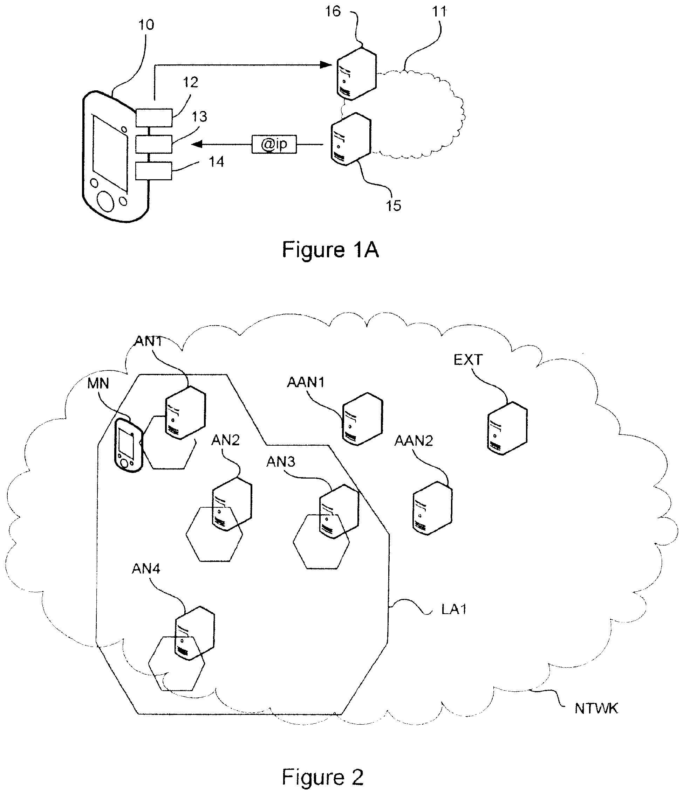

Le principe général de l'invention est décrit plus précisément en relation avec la figure 1A dans le cas d'un réseau d'accès multi-accès. Un terminal multi-accès 10 comprend différentes interfaces d'accès au réseau d'accès 11 : par exemple une interface GPRS (12), une interface UMTS (13) et une interface WiFi (14). Lorsque le terminal 10 souhaite transmettre ou recevoir des données, par exemple en utilisant l'interface UMTS 13, il obtient, par l'intermédiaire d'un nœud d'accès AN 15, une adresse IP. Cette adresse IP est enregistrée au sein du nœud d'accès 15. Selon l'invention, ce nœud d'accès 15 enregistre également l'état du terminal et assure la fonction de nœud d'accès ancre. Comme le terminal a obtenu une adresse IP et qu'il transmet/reçoit des données en passant par ce nœud d'accès, ce terminal 10 est considéré comme étant actif.

Lors de sa désactivation, c'est-à-dire lors d'un passage en mode passif (c'est-à-dire que le terminal n'a plus la nécessité de transmettre des données, et ce quelle que soit l'interface), l'état du terminal 10 est, selon l'invention, notifié au sein du nœud d'accès ancre 15, lequel enregistre le passage du terminal 10 du mode actif au mode passif et la localisation du terminal dans le réseau d'accès 11 n'est plus connue par celui-ci. La transmission du changement d'état du terminal de communication 10 au nœud d'accès ancre 15 peut être réalisée par l'intermédiaire d'un autre nœud d'accès 16 auquel le terminal s'est entre temps attaché, par exemple à l'aide de son interface GPRS 12.

Par la suite, lorsque par exemple le nœud d'accès ancre souhaite transmettre des données au terminal 10, il est d'abord nécessaire de rechercher, de découvrir et d'activer le terminal dans le réseau afin qu'il puisse s'attacher à un nouveau noeud d'accès. Selon l'invention, préalablement à cet attachement, il est procédé à une recherche d'au moins un nœud d'accès connu duquel le terminal a précédemment reçu des données ou auquel il a précédemment transmis des données, et ce *quelle que soit l'interface précédemment utilisée.* Dans cet exemple, cette recherche permet de déterminer que le dernier nœud d'accès connu est le nœud d'accès 16. Le nœud d'accès ancre 15 procède donc, selon l'invention, à l'initialisation de l'opération de paging, qui est réalisée par le nœud d'accès 16 par l'intermédiaire de l'interface GPRS 12. Selon les techniques de l'art antérieur au contraire, une telle initialisation serait réalisée par l'intermédiaire de l'interface UMTS 13.

Ainsi, l'invention a permis de réaliser un paging, en ne nécessitant pas, d'une part, l'utilisation d'une entité centralisée du réseau de communication, et d'autre part, en mettant à profit les multiples interfaces dont dispose le terminal, afin de ne pas avoir à réaliser un paging par interface du terminal.

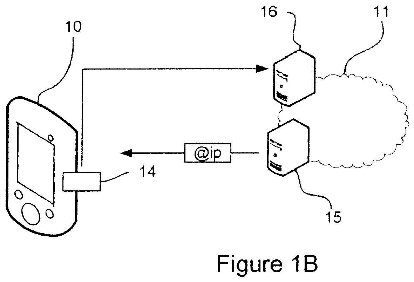

On présente, en relation avec la figure 1B, le principe général de l'invention dans le cas d'un réseau d'accès mono-technologie qui ne comprend pas, nativement, de mécanisme de recherche, de découverte et d'activation de terminaux de communication.

Un terminal multi-accès 10 comprend une interface d'accès à un réseau d'accès mono-technologie 11 : par exemple une interface WiFi (14). Lorsque le terminal 10 souhaite transmettre ou recevoir des données, en utilisant l'interface WiFi 14, il obtient, par l'intermédiaire d'un nœud d'accès AN 15, une adresse IP. Cette adresse IP est enregistrée au sein du nœud d'accès 15. Selon l'invention, ce nœud d'accès 15 enregistre également l'état du terminal et assure la fonction de nœud d'accès ancre. Comme le terminal a obtenu une adresse IP et qu'il transmet/reçoit des données en passant par ce nœud d'accès, ce terminal 10 est considéré comme étant actif.

Lors de sa désactivation, c'est-à-dire lors d'un passage en mode passif (c'est-à-dire que le terminal n'a plus la nécessité de transmettre des données, et ce par quelque interface que ce soit), l'état du terminal 10 est, selon l'invention, notifié au sein du nœud d'accès ancre 15, lequel enregistre le passage du terminal 10 du mode actif au mode passif et la localisation du terminal dans le réseau d'accès 11 n'est plus connue par celui-ci. La transmission du changement d'état du terminal de communication 10 au nœud d'accès ancre 15 peut être réalisée par l'intermédiaire d'un autre nœud d'accès 16 auquel le terminal s'est entre temps attaché.

Par la suite, lorsque par exemple le nœud d'accès ancre souhaite transmettre des données au terminal 10, il est d'abord nécessaire de rechercher, de découvrir et d'activer le terminal dans le réseau afin qu'il puisse s'attacher à un nouveau noeud d'accès. Selon l'invention, préalablement à cet attachement, il est procédé à une recherche d'au moins un nœud d'accès connu duquel le terminal a précédemment reçu des données ou auquel il a précédemment transmis des données. Dans cet exemple, cette recherche permet de déterminer que le dernier nœud d'accès connu est le nœud d'accès 16. Le nœud d'accès ancre 15 procède donc, selon l'invention, à l'initialisation de l'opération de paging, qui est réalisée par le nœud d'accès 16 par l'intermédiaire de l'interface WiFi 14. Selon les techniques de l'art antérieur au contraire, une telle initialisation n'aurait pas été possible puisque le nœud d'accès aurait été connecté en permanence à l'un des nœuds d'accès 15 ou 16.

Les mécanismes qui permettent de réaliser une mise en veille d'un terminal de communication qui met en œuvre une technologie qui ne comprend pas nativement de mécanisme d'activation/désactivation sont décrits par la suite.

Par la suite, on présente également en détail les mécanismes de paging distribué selon l'invention, dans lesquels l'initialisation du paging est réalisée par une ancre de mobilité. Une ancre de mobilité est un nœud d'accès du réseau d'accès qui est utilisé pour router les données vers un terminal. Cette ancre de mobilité reçoit de la part d'entités du réseau de communication des données à transmettre au terminal. L'ancre de mobilité enregistre l'adresse IP que le terminal a précédemment acquise auprès d'elle pour la transmission de ces données.

Il est bien évident que le mode de réalisation présenté par la suite n'est pas limitatif et qu'il est tout à fait envisageable de confier la fonction d'initialisation du paging à une autre entité que l'ancre de mobilité, comme cela a été décrit en figure 1A et 1B, à la condition que cette autre entité ait une connaissance, selon l'invention, des nœuds d'accès courants visités par le terminal préalablement à son passage à l'état « passif » (à sa désactivation) et que cette entité soit capable de contacter les nœuds d'accès courants visités pour leur transmettre une requête de recherche de terminal.

On présente également dans la suite les mécanismes de changement d'état du terminal ainsi que la méthode astucieuse des inventeurs pour permettre le support de paging par les interfaces et les protocoles qui n'autorisent pas nativement ces mécanismes, comme par exemple le WiFi (norme 802.11).

### 5.2 Zones de localisation

On considère que, dans une zone de localisation, tous les nœuds d'accès peuvent prendre part au mécanisme d'activation d'un terminal désactivé selon l'invention. Pour les technologies n'implémentant pas le paging, l'utilisation du mécanisme de désactivation n'évitera pas l'attachement radio du terminal sur son nœud d'accès courant. Cependant, selon l'invention, l'attachement doit permettre de limiter la signalisation en évitant la mise à jour de localisation dans le réseau. Le terminal en veille peut donc, selon l'invention, se contenter de s'attacher au niveau 2 sur un nœud d'accès sans déclarer sa position courante au réseau. Ses contextes réseaux (par exemple les ancres de mobilité) ne sont pas modifiés. Le terminal reste ainsi à l'état passif mais est en mesure de recevoir les messages d'annonces de routeur ou de requêtes de résolution d'adresse ARP (Address Resolution Protocol, RFC 826) diffusés par le noeud d'accès sur son interface radio. L'interface du terminal doit donc être légèrement modifiée, selon l'invention, pour s'attacher le plus économiquement possible, c'est-à-dire sans déclarer sa position courante et sans changer ses contextes réseaux.

Un terminal se déplaçant dans le réseau doit savoir dans quelle zone de localisation il se trouve. L'identifiant de zone de localisation doit être diffusé par chaque nœud d'accès, reçu et traité par chaque terminal, en particulier en mode veille, lorsque le terminal est passif (c'est-à-dire inactif).

Dans le cas de technologies qui comprennent un mécanisme de recherche, de découverte et d'activation des terminaux, l'annonce de l'identifiant de la zone courante est déjà prévue. Dans le cas de technologies qui mettent en œuvre des interfaces qui ne comprennent pas un tel mécanisme, l'invention prévoit d'ajouter, dans au moins un mode de réalisation, des informations, soit au niveau des messages d'annonce de niveau 2 lorsque cela est possible, soit dans les annonces de routeur de niveau 3. Les niveaux 2 et 3 dont il est question se rapportent aux couches du modèle OSI permettant l'interconnexion de systèmes.

Sur les interfaces qui ne comprennent pas de mécanisme de paging, le terminal devra donc être en mesure de décoder ces messages d'annonce. Une autre solution pour les technologies qui ne comprennent pas de mécanisme de paging consiste à prévoir un service d'information MIH (standard IEEE 802.21) dans le nœud d'accès. Le terminal en veille qui s'attache sur un tel nœud d'accès souscrit systématiquement à ce service d'information, ce qui lui permet de recevoir de la part du noeud d'accès les informations de zone de localisation.

L'identifiant de zone de localisation doit être unique dans le réseau hétérogène considéré. Son utilisation sur différentes technologies peut amener à implémenter des modifications mineures de chaque interface radio afin de diffuser l'identifiant de zone globale à la place de l'identifiant normalisé pour la technologie radio. Selon un mode de réalisation de l'invention, la construction d'identifiant est similaire à celle implémentée en GSM et agrège un identifiant de pays, un identifiant de réseau et un numéro de zone de localisation.

Chaque nœud d'accès est en mesure de mettre en œuvre la diffusion d'une requête de recherche (paging) aux autres nœuds d'accès de sa zone de localisation. La mise en œuvre est précisée dans les paragraphes suivants.

### 5.3 Etats du terminal

Les terminaux mobiles peuvent implémenter plusieurs interfaces de technologies différentes (2G/3G, WiFi...). Dans l'approche de l'invention, on considère que la gestion de la mobilité et de la joignabilité d'un mobile multi-interfaces peut se faire de manière globale pour l'ensemble de ses interfaces, à travers la distribution de ces fonctions dans les ancres de mobilité. Les ancres de mobilité supportent donc la fonction de paging. Lorsqu'elle remplit cette fonction, l'ancre de mobilité est également nommée ancre de paging. Ainsi, on évite de gérer au niveau du réseau un état de mobile par interface (actif/passif...), tel que prévu dans la solution de paging de l'art antérieur, qui nécessite une gestion complexe de la connectivité du mobile. Il est important de noter que la fonction d'ancre de paging peut aisément être réalisée au sein d'autres entités que l'ancre de mobilité. L'implémentation présentée ici ne l'est qu'à titre indicatif.

Afin de permettre l'implémentation d'un mécanisme efficace et simple, les inventeurs ont décidé de ne gérer dans le réseau que deux états par mobile :
- Actif : le terminal est localisé dans au moins une cellule du réseau, i.e. qu'il est attaché à un (ou plusieurs) noeuds d'accès. La connaissance de cet attachement est distribuée dans le réseau à travers ses nœuds d'accès et ses ancres de mobilité de manière à être en mesure de le joindre pour délivrer le trafic entrant (établissement de nouvelles sessions ou paquets de données).
- Passif : le terminal est présent dans une zone de localisation (un ensemble de cellules) mais sa localisation précise dans la zone n'est pas connue par le réseau. Afin de pouvoir émettre ou recevoir du trafic, le terminal doit basculer dans l'état actif. Pour joindre le terminal lorsqu'il en a besoin, le réseau génère, selon l'invention, l'émission de requêtes de recherche (paging) du terminal dans la zone de localisation afin d'inciter le terminal à se localiser et basculer dans l'état actif.

Ainsi, à partir du moment où le terminal est attaché au réseau sur au moins une interface, il est considéré comme actif, quel que soit l'état de ses autres interfaces (détachées ou en mode veille).

Selon l'invention, le paging n'est pas déclenché pour un terminal actif puisqu'il est joignable sur au moins une interface. Il appartient cependant au terminal de déclencher des localisations supplémentaires sur ses autres interfaces s'il souhaite rediriger le trafic dessus. Le terminal doit coordonner la gestion de son état global (actif/passif) avec la gestion des états de ses interfaces (active, veille, désassociées, ...). Les états possibles de chaque interface sont propres à la technologie radio de celle-ci.

Les contextes d'un terminal sont, dans au moins un mode de réalisation de l'invention, maintenus au niveau des nœuds ancres et des nœuds d'accès du réseau. Ces contextes peuvent être gérés à l'aide de deux tables :
- Chaque nœud ancre maintient une base de données des terminaux pour lesquels il est une ancre de mobilité : la table AAN. Cette table comprend pour chaque terminal ancré dans le nœud : l'adresse IP du terminal pour laquelle l'ancre est activée, la durée de vie associée, l'adresse IP du ou des nœuds d'accès sur lequel le terminal est joignable (les nœuds d'accès courants visités ou VAN pour "Visited Access Node") et un indicateur d'état du mobile (0=mobile passif, 1=mobile actif). Pour chaque terminal passif la donnée « nœud d'accès courant visité» indique le dernier nœud d'accès connu sur lequel le terminal était localisé lorsqu'il a déclaré qu'il passait en état passif.
- Chaque nœud d'accès maintient une table des terminaux qui lui sont attachés : la table VAN. Cette table liste pour chaque terminal les adresses IP utilisées par le terminal, ce qui permet au noeud d'accès de déterminer la liste des nœuds ancre du terminal à partir des préfixes des adresses IP.

Selon l'invention, chaque nœud d'accès sur lequel un terminal s'attache peut à la fois être utilisé comme nœud d'accès et comme nœud ancre. Le principe de gestion du paging selon l'invention repose sur la distribution de l'état du mobile entre ses nœuds ancres en enregistrant l'adresse du (des) dernier(s) nœud(s) d'accès courant(s) visité(s), qui sont les derniers nœuds connus.

Un terminal en mode actif peut être amené à se déplacer dans le réseau et à modifier ses attachements sur les nœuds d'accès. Le réseau prend en compte ces changements et met à jour les contextes AAN et VAN correspondants lors des changements tels que le détachement du mobile d'un nœud d'accès ou l'attachement sur un nouveau nœud d'accès. Ces événements peuvent être la conséquence de handovers, d'activation ou de désactivation d'une interface radio, d'une perte de couverture...

Afin de permettre la remontée des événements du terminal vers le réseau, les inventeurs ont eu l'idée d'utiliser des fonctions et primitives MIH définies dans la norme IEEE 802.21. L'utilisation de MIH permet d'envisager son implémentation sur plusieurs technologies radio différentes. Comme alternative, il est également possible d'envisager de définir un nouveau protocole de signalisation spécifiquement lié à l'implémentation d'un mécanisme de paging selon l'invention.

### 5.4 Identifiant de terminal utilisé pour le paging

Afin d'identifier le terminal recherché durant la procédure de paging selon l'invention, un identifiant global unique est nécessaire, utilisable quelle que soit la (ou les) technologie(s) des interfaces du terminal. Il est possible, dans un premier temps, d'utiliser une adresse IP comme identifiant. Cela requiert une adaptation du mécanisme de paging pour les interfaces radio qui implémentent ce mécanisme : au lieu de diffuser un identifiant propre à la technologie (le TMSI, « Temporary Mobile Subscriber Identity » par exemple en cellulaire), la requête de paging doit permettre la diffusion de l'adresse IP recherchée.

L'utilisation de l'adresse IPv4 ou IPv6 a plusieurs avantages :
- l'adresse IP globale est unique. Si nécessaire on peut envisager dans un domaine restreint (un réseau d'opérateur par exemple) d'utiliser un mécanisme d'adressage privé, les adresses IP ne sont pas globales mais restent uniques dans le domaine considéré et donc utilisables pour identifier le terminal recherché;
- chaque terminal peut à tout moment avoir plusieurs adresses IP activées. Il devra s'attacher à la suite d'une procédure de paging effectuée avec l'une de ces adresses.

Un terminal n'est joignable par le réseau que s'il a au moins une adresse IP active. Au niveau d'une ancre de mobilité, l'expiration d'une temporisation mesurant la durée d'inactivité du terminal entraîne la désactivation de cette adresse, ce qui a pour conséquence que le terminal ne peut plus être joint en utilisant cette adresse. Le terminal doit donc s'assurer de contrôler les mises à jour des contextes qu'il juge nécessaires pour être joint. S'il n'a pas de connexions de transport en cours (TCP, « Transport Control Protocol ») sur une adresse IP donnée, il peut laisser expirer la validité de cette adresse. Par contre s'il souhaite être joignable à l'établissement de nouvelles sessions sur l'une de ses adresses IP, il doit maintenir vivante cette adresse et les contextes associés. Par exemple si les services entrants (établissement de communication à destination du nœud mobile) reposent sur l'utilisation du protocole d'établissement de session SIP (« Session Initiation Protocol »), le terminal doit s'assurer que l'une de ses adresses à jour est bien déclarée dans les serveurs SIP. Les serveurs SIP enregistrent la correspondance entre l'identifiant de l'utilisateur (SIP URI) et l'adresse IP courante. Lors de l'établissement d'un appel SIP, le réseau effectue ainsi un mécanisme de résolution lui permettant de récupérer l'adresse IP du terminal devant être utilisée pour la signalisation d'appel. Cette adresse IP est alors routée automatiquement vers l'ancre de mobilité qui est en mesure de déterminer l'état du mobile (actif ou passif) et donc de déclencher l'initialisation du paging avec cette adresse IP comme identifiant si le terminal est à l'état passif.

### 5.5 Basculement du terminal en mode passif

Le passage de l'état actif à l'état passif est déclenché lorsque le terminal n'est pas en train d'émettre ou recevoir du trafic de données et souhaite favoriser ses économies d'énergie. Ceci peut se faire par exemple lorsque les sessions applicatives en cours se terminent ou bien lorsque le terminal a observé une période d'inactivité pendant un temps prédéterminé (pas d'émission ni de réception de paquets IP).

En mode passif (inactif), l'état du terminal est maintenu au niveau des contextes AAN des ancres de paging alors que les contextes VAN des nœuds d'accès courants sont supprimés. Lors du basculement du mode actif au mode passif, il est donc nécessaire de mettre à jour les contextes AAN qui sont maintenus dans les ancres de paging tout en s'assurant de la suppression des contextes VAN qui sont maintenus dans les nœuds d'accès courants. Le principe repose sur la distribution des fonctions entre le terminal, les nœuds d'accès sur lesquels il est attaché et ses ancres de paging. Lorsque le terminal bascule dans l'état passif, il le notifie à ses nœuds d'accès courants à travers l'émission d'un message spécifique, une notification de désactivation, se basant par exemple sur l'émission d'une primitive MIH. Etant donné qu'une telle primitive n'est pas totalement prévue par ce standard, les inventeurs ont eu l'idée d'utiliser la primitive "link_down indication" avec un nouveau "ReasonCode" spécifique à la gestion de la veille du terminal.

Chaque nœud d'accès prend en compte le nouvel état du mobile en propageant l'information de basculement en mode passif auprès de chaque ancre de paging du terminal. A travers sa table VAN, le nœud d'accès courant connaît la liste d'adresses IP utilisées par le terminal et en déduit les adresses IP des ancres de paging. Il émet à destination de chacun des nœuds ancre de paging, une donnée représentative du changement d'état du terminal, qui est par exemple un paquet de données spécifique de changement d'état du mobile. Ce paquet est par exemple un paquet de données vide dont les adresses source et destination correspondent à l'adresse du mobile acquise sous l'ancre concernée. Il est encapsulé du nœud d'accès courant à l'ancre de paging en utilisant un autre paquet de données, qui comprend l'adresse du nœud d'accès courant et l'adresse de l'ancre de paging.

D'autres protocoles de signalisation entre nœud d'accès courant visité et ancre de paging peuvent être également envisagés. Lorsque l'ancre de paging reçoit l'indication de passage en mode passif, elle procède à la mise à jour de sa table AAN : elle positionne l'indicateur d'état du mobile à "passif", efface la liste des nœuds d'accès courants et enregistre l'adresse du nœud d'accès courant qui lui a transmis l'information de basculement. Si plusieurs nœuds d'accès remontent l'indication de basculement en mode passif, l'ancre de paging maintient l'état passif pour le terminal et enregistre les adresses des différents nœuds d'accès courants dans sa liste.

Une fois le basculement d'état notifié auprès des ancres de paging, le nœud d'accès courant supprime le contexte VAN correspondant. Le terminal est alors passif, il est en mesure de se déplacer dans sa zone de localisation tout en évitant de mettre à jour sa localisation à chaque changement de cellule.

Préalablement au basculement en mode passif, un terminal multi-interfaces connecté sur plusieurs nœuds d'accès simultanément peut choisir de désactiver (ou détacher du réseau) certaines de ses interfaces afin, par exemple, de ne déclarer le passage en mode passif que lorsqu'il n'a plus qu'une seule interface active. Ceci peut permettre d'éviter de transmettre simultanément plusieurs indications de basculement en mode passif à travers les différentes interfaces.

### 5.6 Mise en œuvre du paging

Le paging est déclenché, selon l'invention, lorsque le réseau reçoit des paquets à destination d'un terminal inactif. Cela se produit au niveau de l'ancre de mobilité en charge de transférer ces paquets (i.e. de l'ancre de l'adresse IP du mobile à laquelle sont destinés ces paquets).

Les paquets reçus à destination d'un mobile passif sont enregistrés dans une mémoire temporaire par l'ancre de mobilité durant la procédure de paging. L'ancre connaît l'adresse IP du nœud d'accès (ou des nœuds d'accès) sur lequel (lesquels) le terminal a basculé à l'état passif : ce sont les derniers nœuds d'accès connus qui ont été préalablement enregistrés. Les derniers nœuds d'accès connus sont capables d'initier les requêtes de paging dans la zone de localisation du terminal.

L'ancre de mobilité est donc en mesure de déterminer quel nœud d'accès utiliser pour mettre en œuvre le paging; si plusieurs nœuds d'accès sont enregistrés dans sa table AAN, l'ancre doit sélectionner un ou plusieurs nœuds d'accès à utiliser. Si elle en sélectionne plusieurs, elle multiplie les requêtes de paging et donc la signalisation associée tout en augmentant ses chances de joindre le terminal au plus tôt.

Dans la suite, les nœuds d'accès qui sont chargés de la mise en œuvre du paging par l'ancre de paging sont notés ANp afin de les distinguer des autres nœuds.

L'ancre de paging déclenche la procédure en construisant une donnée d'activation destinée au terminal, comme un paquet vide à destination du terminal. Cette donnée d'activation est encapsulée afin de l'émettre vers le ou les nœuds d'accès ANp concernés (paquet "tunnelé" entre l'ancre et le nœud d'accès ANp). A la réception de ce paquet, le noeud d'accès ANp le décapsule et constate qu'il est à destination d'un terminal absent de sa table VAN. Il doit donc déclencher la diffusion de requêtes de paging dans l'ensemble de la zone de localisation.

Une autre solution consisterait à utiliser un protocole de signalisation explicite afin d'émettre une requête de déclenchement de paging de l'ancre de mobilité à chaque nœud d'accès ANp, les notifiant de la nécessité de déclencher le paging en indiquant l'identifiant du terminal cible.

La requête de paging diffusée dans la zone de localisation par un noeud d'accès ANp est une requête multicast qui utilise une adresse de groupe multicast pré-établie par configuration dans le réseau. Le noeud d'accès ANp construit le paquet multicast à destination du groupe multicast de sa zone dans lequel il encapsule le paquet reçu de l'ancre de paging (ou bien simplement l'adresse IP utilisée comme identifiant du terminal cible). Le paquet multicast est alors diffusé à l'ensemble du groupe (ensemble des AN de la zone de localisation).

Une autre approche peut consister à ne pas utiliser de multicast à condition que le noeud d'accès ANp dispose de la liste des adresses des AN voisins de sa zone de localisation. Il peut alors utiliser un protocole de signalisation explicite et émettre spécifiquement 1 paquet unicast de requête à destination de chacun des nœuds d'accès de sa zone.

Chaque nœud d'accès recevant la requête de recherche s'aperçoit qu'il s'agit d'un paquet de paging à la réception du paquet multicast (ou bien d'une requête de signalisation explicite émise par l'ANp). Il récupère l'identifiant du terminal recherché et diffuse une requête de recherche du nœud mobile sur la cellule radio.

A chaque nœud d'accès (y compris l'ANp), la diffusion du paging sur sa (ou ses) cellule(s) radio est déclenchée suivant un mécanisme propre à la technologie radio du nœud d'accès :
- soit par l'émission d'un message de paging explicite tel que supporté par l'interface radio. L'identifiant utilisé est l'adresse IP du mobile (cas n°1);
- soit par l'émission d'une requête ARP si l'interface ne supporte pas explicitement le paging (cas n°2).

Le terminal qui reçoit un message correspondant au paging met en œuvre sa procédure de mise à jour de localisation:
- dans le cas n°1 (technologie supportant la diffusion de messages de paging), le terminal reçoit la requête de paging à travers un canal de signalisation diffusé par le noeud d'accès alors qu'il n'a pas d'attachement courant de niveau 2 puisqu'il se contente d'interpréter ces éléments de signalisation diffusés. Il doit donc, afin de se localiser dans le réseau, commencer par s'attacher au niveau radio sur l'une des cellules dans lesquelles il se trouve. Il ne s'attache pas nécessairement sur la cellule sur laquelle il a reçu la requête de paging car il se peut qu'une autre cellule de technologie identique ou différente corresponde mieux à ses critères de sélection.
- Dans le cas n°2 (technologie ne comprenant pas de mécanisme de paging), le terminal répond à la requête ARP. Il émet ensuite les requêtes de mise à jour de localisation à destination de ses ancres de mobilité, comprenant notamment l'ancre de paging. Ces requêtes peuvent être émises, selon l'invention, vers des nœuds d'accès de technologies différentes, i.e. en utilisant une interface différente de celle qui a reçue la requête ARP.

Dans les deux cas, le terminal peut également choisir de se localiser simultanément sur plusieurs nœuds d'accès à travers ses différentes interfaces d'accès.

A la réception de la mise à jour de localisation du terminal :
- Chaque ancre de mobilité met à jour sa table AAN en enregistrant le nouvel état actif et l'adresse du nouvel AN sur lequel le terminal est à nouveau localisé.
- L'ancre de paging, en plus de la mise à jour de sa table AAN, procède au transfert des paquets destinés au mobile à travers le nouveau noeud d'accès courant (paquets mis en mémoire tampon durant la procédure de paging).

Lors de la procédure de paging les paquets de recherche et mise à jour peuvent être perdus, un mécanisme de retransmission est donc prévu. Au niveau de l'ancre de paging, une temporisation de retransmission du paquet de déclenchement du paging et un compteur de retransmission sont utilisés : la temporisation et le compteur sont initialisés à l'émission du premier paquet de paging vers un ANp. Les valeurs d'initialisation sont paramétrées par configuration. A la réception de la mise à jour de localisation du terminal, la procédure est terminée et le décompte de la temporisation et du compteur sont arrêtés. Lorsque la temporisation arrive à échéance alors que le paquet de mise à jour n'est pas reçu: si le compteur de retransmissions n'est pas nul le(s) paquet(s) de paging est (sont) retransmis alors que la temporisation est ré-initialisée et le compteur est décrémenté; sinon la procédure est arrêtée, le terminal est alors injoignable. Ses contextes de localisation sont effacés et les paquets qui lui sont destinés sont perdus.

### 5.7 Exemple de mise en œuvre

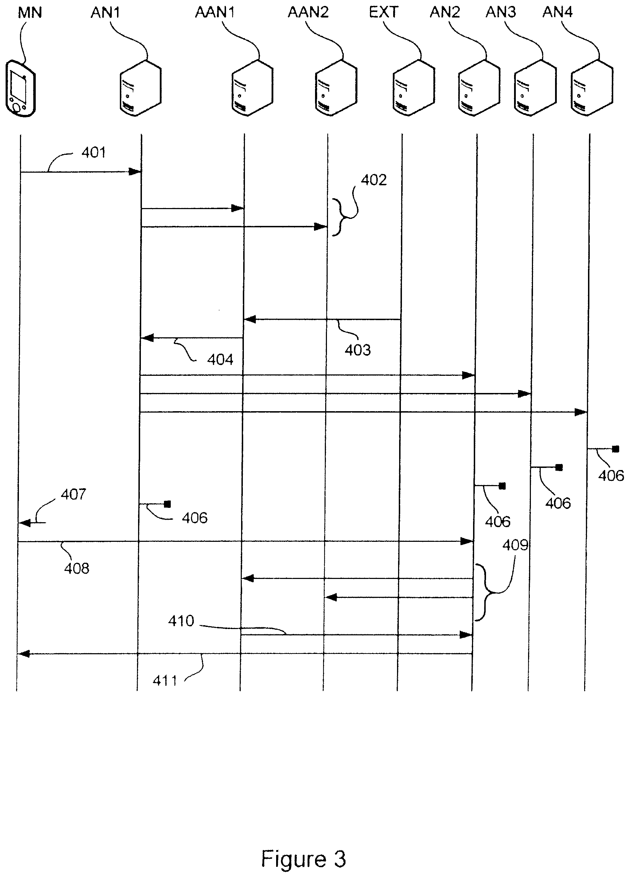

On présente, en relation avec la figure 2 et la figure 3, un exemple de mise en œuvre du procédé de l'invention.

Un terminal MN est initialement actif et localisé sur le nœud d'accès AN1. Le nœud d'accès AN1 fait partie d'une zone de localisation LA1, comprenant également les nœuds d'accès AN2, AN3 et AN4. Le terminal MN possède par ailleurs deux ancres de mobilité (AAN1 et AAN2). Les nœuds d'accès et les ancres de mobilité (qui sont également des nœuds d'accès, à la base) font partie d'un réseau d'accès NTWK. L'ancre de mobilité AAN1 auprès de laquelle le terminal MN a enregistré une adresse IP, est susceptible de recevoir des données pour le terminal MN en provenance d'une source extérieure EXT située par exemple au sein d'un réseau cœur. C'est également le cas de l'ancre de mobilité AAN2. La mise en œuvre générale du paging selon l'invention est illustrée en relation avec la figure 3.
- Dans une première phase, le terminal MN décide de passer de l'état actif à l'état passif. Il le notifie (401) en émettant l'événement correspondant vers son nœud d'accès courant (AN1). Le nœud d'accès courant AN1 devient le dernier nœud d'accès connu (ANp) pour ce terminal MN.
- L'événement de basculement à l'état passif du terminal est propagé (402) par le nœud d'accès courant AN1 vers les ancres de mobilité (AAN1 et AAN2). Les contextes correspondants sont mis à jour avec le nouvel état du mobile (tables AAN des ancres de mobilité). Le contexte de localisation du terminal dans AN1 est supprimé. Le réseau considère alors le terminal dans l'état passif.

Cette phase correspond à la phase de mise en veille du terminal MN.
- Par la suite, dans un deuxième temps, l'ancre de mobilité AAN1 reçoit 403 des paquets de données destinés au terminal MN. L'ancre de mobilité consulte sa table de contexte, détermine que le terminal est en mode passif et que le dernier nœud d'accès connu ANp est le nœud d'accès AN1. Elle devient l'ancre de paging du terminal MN. L'ancre de paging AAN1 décide d'initier la procédure de paging : il enregistre en mémoire tampon les paquets à destination du terminal MN et construit un paquet vide à destination du terminal MN.
- L'ancre de paging AAN1 émet 404 le paquet d'initialisation du paging à destination du dernier nœud d'accès connu ANp, le nœud d'accès AN1. A la réception de ce paquet, le nœud d'accès AN1 identifie que le terminal considéré n'est pas enregistré dans sa table VAN, il décide donc de propager la recherche du terminal dans sa zone de localisation.
- le nœud d'accès AN1 génère une requête de paging encapsulant le paquet reçu de l'ancre de paging AAN1 vers l'ensemble des nœuds d'accès de la zone de localisation.

Dans cet exemple, cette requête est diffusée en multicast.
- Chaque nœud d'accès (AN2, AN3, AN4) recevant la requête de paging (ainsi que le nœud d'accès AN1) génère 406 une requête de recherche du terminal sur sa cellule radio (par exemple en réalisant un paging de niveau 2 ou en diffusant une requête de type ARP). La requête de paging se fait avec l'adresse IP du mobile allouée à l'origine par l'ancre de mobilité AAN1.
- Le terminal MN qui se déplace dans la zone de localisation reçoit 407 la requête de paging, identifie qu'elle lui est destinée en décodant l'adresse IP. Il peut en déduire que l'ancre de paging est le nœud d'accès AAN1. Il bascule dans l'état actif en s'attachant sur le noeud d'accès le plus proche qui est, par exemple, le nœud d'accès AN2.
- Le terminal MN, une fois associé au nœud d'accès AN2, met à jour 408 sa localisation auprès de ses différentes ancres. Il peut le faire en priorisant les mises à jour à destination de son ancre de paging AAN1 par rapport aux autres ancres. A la réception 409 des requêtes de mise à jour, les nœuds d'accès ancre AAN1 et AAN2 enregistrent la nouvelle localisation du terminal MN (en l'occurrence le nœud d'accès AN2) et son basculement à l'état actif. Le nœud d'accès ancre AAN1 est alors en mesure de transmettre 410 les paquets enregistrés en mémoire tampon vers la nouvelle position (AN2) qui les retransmet 411 au terminal MN.

### 5.8 Autres caractéristiques optionnelles et avantages

### Temporisation de basculement en mode passif

Selon une caractéristique particulière de l'invention, le basculement d'un terminal de l'état actif à l'état passif peut se faire alors que des paquets sont en cours d'acheminement vers ce mobile. En effet, lors de son basculement le terminal et son nœud d'accès courant (l'ANp) peuvent, selon l'invention, maintenir l'état actif durant une temporisation configurable permettant de recevoir les éventuels paquets de données en cours d'acheminement. Si de tels paquets arrivent avant l'échéance de la temporisation, ils sont délivrés au terminal. Il peut ensuite soit poursuivre son basculement dans l'état passif soit décider de rester actif mais il doit alors se localiser de nouveau afin d'éviter que ses ancres de mobilité ne le considère à l'état passif.

### Mises à jour périodique des contextes

Lorsque le terminal bascule de l'état actif à l'état passif, il l'indique au réseau qui maintient son état passif et ses tables tant que les adresses IP du mobile restent valides. Les adresses IP étant invalidées automatiquement au bout d'un temps d'inactivité donné, le terminal doit se réassocier et se localiser auprès de ses ancres de mobilité avant cette échéance, quitte à repasser ensuite rapidement en état passif. Ce mécanisme permet de s'assurer que le terminal se relocalise régulièrement. Lorsque le terminal détermine qu'il peut désactiver une ancre de mobilité donnée (par exemple une fois que le terminal a clôturé toutes les sessions de transport utilisant une adresse IP donnée), il n'a pas à mettre à jour son contexte de localisation dans l'AAN correspondant. Ceci permet de supprimer les contextes réseau non utilisés.

### Priorisation des requêtes de mise à jour suite au « paging »

Lors du basculement à l'état actif suite à une requête de paging distribué selon l'invention, le terminal peut choisir de prioriser l'envoi de sa requête de mise à jour à destination de son ancre de paging par rapport à celles concernant ses autres ancres de mobilité. Cela permet de mettre à jour en priorité le contexte de la table AAN utilisée dans la procédure de paging et de débloquer le transfert des paquets en attente.

### Paging restreint à certaines technologies

Il peut être prévu, lorsque l'une des technologies du réseau fournit une couverture omniprésente et est implémentée sur l'ensemble des terminaux, de restreindre les zones de localisation aux cellules de cette technologie (UMTS par exemple). Ainsi lorsque le terminal passe à l'état passif il se contente de scruter les messages de paging de cette technologie. Le nœud d'accès ANp n'a pas nécessairement à supporter cette technologie, le terminal pourrait par exemple basculer à l'état passif sur un nœud d'accès ANp WiFi qui, ensuite, ne propagerait les requêtes de paging que via des nœuds d'accès UMTS sans mettre en œuvre lui-même de paging radio.

### Utilisation de SIP

Comme cela est décrit précédemment, le terminal à l'état passif qui souhaite pouvoir être joint à travers un réseau de signalisation basé sur SIP doit maintenir à jour son contexte AAN correspondant à l'adresse IP enregistrée dans les serveurs SIP (voir mise à jour périodique des contextes). Cette adresse IP peut changer dans le temps et les mécanismes de SIP permettent de la modifier à l'initiative du terminal. Un terminal à l'état actif est donc en mesure de sélectionner l'adresse IP sur laquelle il peut être joint via SIP. Une fois à l'état passif il doit cependant s'assurer que le contexte AAN correspondant à l'adresse enregistrée reste valide. Il est donc amené à se localiser régulièrement pour maintenir ce contexte et éviter que les temporisations de validité d'adresse associées n'expirent. Si le terminal à l'état passif souhaite modifier son adresse enregistrée dans le réseau SIP, il doit au préalable se localiser et basculer dans l'état actif afin de mettre en œuvre la mise à jour SIP de manière classique (envoi requête REGISTER au serveur SIP).

Le mécanisme de paging proposé par l'invention complète donc les mécanismes de joignabilité prévus dans le protocole SIP en cas d'utilisation de ce protocole de transmission de données.

### Signalisation entre le terminal et l'ancre de mobilité

Le mécanisme de paging de l'invention se base, dans au moins un mode de réalisation, sur la distribution des fonctions de mise à jour d'état du mobile entre le terminal, les nœuds d'accès et les ancres de mobilité.

Dans un mode de réalisation particulier, une alternative consiste à établir un dialogue direct entre le terminal et ses ancres de mobilité afin que le terminal informe directement ses ancres de mobilité de son basculement en mode passif ou en mode actif suivant un protocole de signalisation dédié. Une telle solution permet d'éviter aux nœuds d'accès de supporter la propagation des informations de changement d'état du mobile vers ses ancres de mobilité comme cela a été expliqué précédemment. Elle induit cependant une signalisation plus importante entre le terminal et le réseau.

Elle est cependant particulièrement intéressante dans le cas où chaque terminal utilise peu d'ancres de mobilité en parallèle. L'échange de signalisation entre un terminal et son ancre peut être envisagé via la spécification d'un protocole dédié ou bien le transport, selon l'invention, de requêtes MIH basées sur la norme IEEE 802.21 (par exemple la primitive "link_down indication" avec un nouveau "ReasonCode" spécifique à la gestion de la veille tel qu'évoqué précédemment).

Le mécanisme de diffusion de requêtes de paging selon l'invention reste identique en s'appuyant sur la propagation via les nœuds d'accès.

### 5.9 Autres caractéristiques optionnelles et avantages

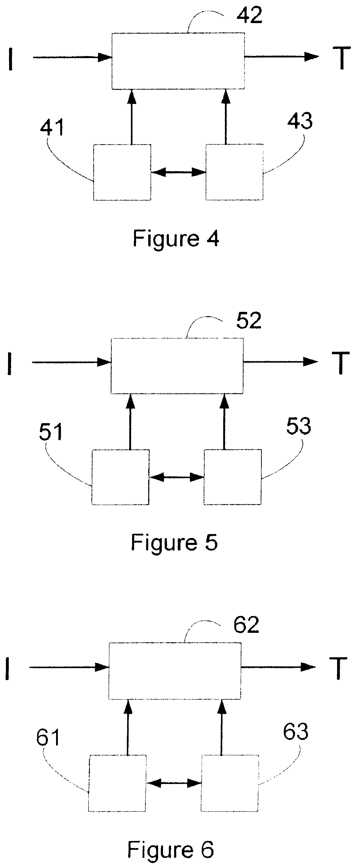

On présente, en relation avec la figure 4, un mode de réalisation d'un nœud d'accès ancre selon l'invention.

Un tel nœud d'accès comprend une mémoire 41 constituée d'une mémoire tampon, une unité de traitement 42, équipée par exemple d'un microprocesseur, et pilotée par le programme d'ordinateur 43, mettant en œuvre le procédé d'activation selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée au moins une information I à transmettre (telle que des données à transmettre au terminal). Le microprocesseur de l'unité de traitement 42 met en œuvre les étapes du procédé d'activation décrit précédemment, selon les instructions du programme d'ordinateur 43, pour délivrer une information traitée T (tel qu'une requête d'activation du terminal). Pour cela, le nœud d'accès ancre comprend, outre la mémoire tampon 41, des moyens de réception des données à transmettre au terminal de communication, telle que des interfaces de réseau, des moyens d'identification d'au moins un nœud d'accès auquel le terminal de communication s'est précédemment attaché, dit dernier nœud d'accès connu, à partir de ladite donnée à transmettre et des moyens de transmission, au dernier nœud d'accès connu, d'une donnée d'activation à destination d'au moins une interface de communication dudit terminal, permettant d'activer ledit terminal. Ces moyens permettent notamment l'exécution du procédé selon l'invention. Ces moyens sont pilotés par le microprocesseur de l'unité de traitement 42.

On présente, en relation avec la figure 5, un mode de réalisation d'un nœud d'accès ANp, selon l'invention.

Un tel nœud d'accès comprend une mémoire 51 constituée d'une mémoire tampon, une unité de traitement 52, équipée par exemple d'un microprocesseur, et pilotée par le programme d'ordinateur 53, mettant en œuvre le procédé d'activation selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée au moins une information I à transmettre (telle qu'une requête d'activation du terminal). Le microprocesseur de l'unité de traitement 52 met en œuvre les étapes du procédé d'activation décrit précédemment, selon les instructions du programme d'ordinateur 53, pour délivrer une information traitée T (tel qu'une requête d'activation du terminal à diffuser). Pour cela, le nœud d'accès ANp comprend, outre la mémoire tampon 51, des moyens de réception d' une donnée d'activation préalablement transmise par un nœud d'accès ancre, des moyens de recherche, au sein d'une base de données d'attachements, d'une information représentative d'un attachement courant dudit terminal de communication, des moyens de diffusion d'au moins une requête d'activation, à destination d'une interface dudit terminal de communication au sein d'une zone de localisation à laquelle appartient ledit nœud d'accès, comprenant ladite donnée d'activation, lorsque lesdits moyens de recherche indiquent que ledit terminal n'est pas attaché.

Ces moyens permettent notamment l'exécution du procédé selon l'invention. Ces moyens sont pilotés par le microprocesseur de l'unité de traitement 52.

On présente, en relation avec la figure 6, un mode de réalisation d'un terminal, selon l'invention.

Un tel terminal comprend une mémoire 61 constituée d'une mémoire tampon, une unité de traitement 62, équipée par exemple d'un microprocesseur, et pilotée par le programme d'ordinateur 63, mettant en œuvre le procédé d'activation selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée au moins une information I à transmettre (telle qu'une requête d'activation). Le microprocesseur de l'unité de traitement 62 met en œuvre les étapes du procédé d'activation décrit précédemment, selon les instructions du programme d'ordinateur 63, pour délivrer une information traitée T (tel qu'un attachement à un nouveau nœud d'accès). Pour cela, le terminal comprend, outre la mémoire tampon 61, des moyens de réception, par l'intermédiaire d'au moins une interface de communication, d'une donnée d'activation diffusée par un nœud d'accès ANp, des moyens de vérification que ladite donnée d'activation reçue lui est destinée et des moyens d'activation, lorsque ladite donnée d'activation reçue est destinée au terminal.

Ces moyens permettent notamment l'exécution du procédé selon l'invention. Ces moyens sont pilotés par le microprocesseur de l'unité de traitement 62.

## Revendications

1. Procédé de traitement d'une donnée d'activation d'un terminal de communication multi-accès (MN) supportant au moins deux types d'interfaces de communication différentes, situé dans un réseau de communication sans fil (NTWK) comprenant une pluralité de nœuds d'accès, le terminal (MN) étant passé dans un état dit passif, c'est-à-dire présent dans une zone de localisation du réseau sans que sa localisation précise dans la zone ne soit connue par le réseau (NTWK), alors qu'il est attaché à un nœud d'accès de la zone de localisation dit dernier nœud d'accès connu (AN1), le procédé étant mis en œuvre par le terminal (MN), le procédé comprenant :
• une étape de réception de ladite donnée d'activation par l'intermédiaire d'au moins une première interface de communication d'un premier type ;
• une étape de vérification que ladite donnée d'activation reçue est destinée audit terminal, et, lorsque ladite donnée d'activation reçue est destinée au terminal :
• une étape de détermination d'une deuxième interface d'un deuxième type, à l'aide d'une adresse IP comprise dans la donnée d'activation et attribuée au terminal par un nœud d'accès du réseau de communication sans fil (NTWK) lors d'une précédente session de communication, dit nœud d'accès ancre (AAN1) ;
• une étape d'activation du terminal, par l'intermédiaire d'au moins la deuxième interface de communication, d'un type différent de ladite première interface.

2. Procédé selon la revendication 1, où l'étape d'activation comprend une étape d'attachement à un nœud d'accès (AN2) de la zone de localisation différent du dernier nœud d'accès connu (AN1).

3. Terminal de communication multi-accès (MN) supportant au moins deux types d'interfaces de communication différentes, situé dans un réseau de communication sans fil (NTWK) comprenant une pluralité de nœuds d'accès, le terminal (MN) étant passé dans un état dit passif, c'est-à-dire présent dans une zone de localisation du réseau sans que sa localisation précise dans la zone ne soit connue par le réseau (NTWK), alors qu'il est attaché à un nœud d'accès de la zone de localisation dit dernier nœud d'accès connu (AN1), le terminal (MN) comprenant :
• des moyens de réception d'une donnée d'activation par l'intermédiaire d'au moins une première interface de communication d'un premier type ;
• des moyens de vérification que ladite donnée d'activation reçue est destinée audit terminal ;
• des moyens de détermination d'une deuxième interface d'un deuxième type, à l'aide d'une adresse IP comprise dans la donnée d'activation et attribuée au terminal par un nœud d'accès du réseau de communication sans fil (NTWK) lors d'une précédente session de communication, dit nœud d'accès ancre (AAN1), lorsque ladite donnée d'activation reçue est destinée au terminal ;
• des moyens d'activation du terminal, par l'intermédiaire d'au moins la deuxième interface de communication, d'un type différent de ladite première interface, lorsque ladite donnée d'activation reçue est destinée au terminal.

4. Terminal selon la revendication 3, comprenant en outre des moyens d'attachement dudit terminal à au moins un nœud d'accès (AN2) par le biais de ladite au moins une deuxième interface de communication.

5. Terminal selon l'une des revendications 3 à 4, comprenant en outre des moyens de transmission d'au moins une donnée de mise à jour d'une localisation dudit terminal à destination du nœud d'accès ancre (AAN1).

6. Programme d'ordinateur **caractérisé en ce qu'**il comprend des instructions de code de programme pour la mise en œuvre du procédé de traitement selon la revendication 1, lorsque ce programme est exécuté par un processeur.

## Patentansprüche

1. Verfahren zur Verarbeitung einer Dateneinheit zur Aktivierung eines Kommunikationsendgerätes mit Mehrfachzugriff (MN), das wenigstens zwei Typen unterschiedlicher Kommunikationsschnittstellen unterstützt und sich in einem drahtlosen Kommunikationsnetz (NTWK) befindet, das mehrere Zugangsknoten umfasst, wobei das Endgerät (MN) in einen sogenannten passiven Zustand übergegangen ist, das heißt in einem Lokalisierungsbereich des Netzes vorhanden ist, ohne dass seine genaue Lokalisierung in dem Bereich durch das Netz (NTWK) bekannt ist, während es einem Zugangsknoten des Lokalisierungsbereichs, letzter bekannter Zugangsknoten (AN1) genannt, zugeordnet ist, wobei das Verfahren von dem Endgerät (MN) durchgeführt wird, wobei das Verfahren umfasst:
• einen Schritt des Empfangs der Aktivierungsdateneinheit über wenigstens eine erste Kommunikationsschnittstelle eines ersten Typs;
• einen Schritt der Überprüfung, ob die empfangene Aktivierungsdateneinheit für das Endgerät bestimmt ist, und wenn die empfangene Aktivierungsdateneinheit für das Endgerät bestimmt ist:
• einen Schritt der Bestimmung einer zweiten Schnittstelle eines zweiten Typs mithilfe einer IP-Adresse, die in der Aktivierungsdateneinheit enthalten ist und dem Endgerät durch einen Zugangsknoten des drahtlosen Kommunikationsnetzes (NTWK), Ankerzugangsknoten (AAN1) genannt, während einer vorangegangenen Kommunikationssitzung zugewiesen wurde;
• einen Schritt der Aktivierung des Endgerätes über wenigstens die zweite Kommunikationsschnittstelle eines Typs, der von der ersten Schnittstelle verschieden ist.

2. Verfahren nach Anspruch 1, wobei der Schritt der Aktivierung einen Schritt der Zuordnung zu einem Zugangsknoten (AN2) des Lokalisierungsbereichs, der von dem letzten bekannten Zugangsknoten (AN1) verschieden ist, umfasst.

3. Kommunikationsendgerät mit Mehrfachzugriff (MN), welches wenigstens zwei Typen unterschiedlicher Kommunikationsschnittstellen unterstützt und sich in einem drahtlosen Kommunikationsnetz (NTWK) befindet, das mehrere Zugangsknoten umfasst, wobei das Endgerät (MN) in einen sogenannten passiven Zustand übergegangen ist, das heißt in einem Lokalisierungsbereich des Netzes vorhanden ist, ohne dass seine genaue Lokalisierung in dem Bereich durch das Netz (NTWK) bekannt ist, während es einem Zugangsknoten des Lokalisierungsbereichs, letzter bekannter Zugangsknoten (AN1) genannt, zugeordnet ist, wobei das Endgerät (MN) umfasst:
• Mittel zum Empfang einer Aktivierungsdateneinheit über wenigstens eine erste Kommunikationsschnittstelle eines ersten Typs;
• Mittel zur Überprüfung, ob die empfangene Aktivierungsdateneinheit für das Endgerät bestimmt ist;
• Mittel zur Bestimmung einer zweiten Schnittstelle eines zweiten Typs mithilfe einer IP-Adresse, die in der Aktivierungsdateneinheit enthalten ist und dem Endgerät durch einen Zugangsknoten des drahtlosen Kommunikationsnetzes (NTWK), Ankerzugangsknoten (AAN1) genannt, während einer vorangegangenen Kommunikationssitzung zugewiesen wurde, wenn die empfangene Aktivierungsdateneinheit für das Endgerät bestimmt ist;
• Mittel zur Aktivierung des Endgerätes über wenigstens die zweite Kommunikationsschnittstelle eines Typs, der von der ersten Schnittstelle verschieden ist, wenn die empfangene Aktivierungsdateneinheit für das Endgerät bestimmt ist.

4. Endgerät nach Anspruch 3, welches außerdem Mittel zur Zuordnung des Endgerätes zu wenigstens einem Zugangsknoten (AN2) über die wenigstens eine zweite Kommunikationsschnittstelle umfasst.

5. Endgerät nach einem der Ansprüche 3 bis 4, welches außerdem Mittel zur Übertragung wenigstens einer Dateneinheit zur Aktualisierung einer Lokalisierung des Endgerätes an den Ankerzugangsknoten (AAN1) umfasst.

6. Computerprogramm, **dadurch gekennzeichnet, dass** es Programmcodeanweisungen zur Durchführung des Verfahrens zur Verarbeitung nach Anspruch 1, wenn dieses Programm von einem Prozessor ausgeführt wird, umfasst.

## Claims

1. Method for processing an activation datum of a multiple-access communication terminal (MN) supporting at least two different types of communication interfaces, situated in a wireless communication network (NTWK) comprising a plurality of access nodes, the terminal (MN) having passed into a so-called passive state, that is to say being present in a location zone of the network without its precise location in the zone being known by the network (NTWK), while it is attached to an access node of the location zone called last known access node (AN1), the method being implemented by the terminal (MN), the method comprising:
• a step of reception of said activation datum via at least one first communication interface of a first type;
• a step of checking that said received activation datum is intended for said terminal, and, when said received activation datum is intended for the terminal:
• a step of determination of a second interface of a second type, using an IP address included in the activation datum and assigned to the terminal by an access node of the wireless communication network (NTWK) during a preceding communication session, called anchor access node (AAN1);
• a step of activation of the terminal, via at least the second communication interface, of a type different from said first interface.

2. Method according to Claim 1, in which the activation step comprises a step of attachment to an access node (AN2) of the location zone different from the last known access node (AN1).

3. Multiple-access communication terminal (MN) supporting at least two different types of communication interfaces, situated in a wireless communication network (NTWK) comprising a plurality of access nodes, the terminal (MN) having passed into a so-called passive state, that is to say being present in a location zone of the network without its precise location in the zone being known by the network (NTWK), while it is attached to an access node of the location zone called last known access node (AN1), the terminal (MN) comprising:
• means for receiving an activation datum via at least one first communication interface of a first type;
• means for checking that said received activation datum is intended for said terminal;
• means for determining a second interface of a second type, using an IP address included in the activation datum and assigned to the terminal by an access node of the wireless communication network (NTWK) during a preceding communication session, called anchor access node (AAN1), when said received activation datum is intended for the terminal;
• means for activating the terminal, via at least the second communication interface, of a type different from said first interface, when said received activation datum is intended for the terminal.

4. Terminal according to Claim 3, further comprising means for attaching said terminal to at least one access node (AN2) through said at least one second communication interface.

5. Terminal according to one of Claims 3 and 4, further comprising means for transmitting at least one datum for updating a location of said terminal intended for the anchor access node (AAN1).

6. Computer program, **characterized in that** it comprises program code instructions for implementing the processing method according to Claim 1, when this program is run by a processor.
